# EUROPEAN PATENT APPLICATION

(11) **EP 4 382 354 A1**
(43) Date of publication of application: **12.06.2024**
(21) Application number: 23214795.9
(22) Date of filing: 07.12.2023
(51) Int. Cl.: B60L 58/12, B60L 58/13, B60L 58/14, B60L 58/15

(54) **SYSTEM AND METHOD FOR PERFORMING AN ANIMAL-RELATED ACTION, AND IN COMBINATION, A BARN FOR KEEPING ANIMALS AND A SYSTEM OF THIS KIND**

(30) Priority: 09.12.2022 NL 2033703
(71) Applicant: Lely Patent N.V., 3147 PB Maassluis (NL)
(72) Inventor: BRENNA, Mauro, 3147 PB Maassluis (NL); HORNECKER, Ralph, 3147 PB Maassluis (NL); SIAGKRIS-LEKKOS, Alexis, 3147 PB Maassluis (NL)
(74) Representative: Octrooibureau Van der Lely N.V.

(57) **Abstract**

A system comprises an autonomous vehicle for performing an animal-related action. The vehicle comprises a drive system comprising at least one electric drive motor, and a battery system being connected to provide electrical power to the drive system. The system also comprises a charging system for charging the battery system and a control system for controlling the vehicle and the charging system. The control system comprises a memory in which a minimum charge level and a maximum charge level are stored. The control system is configured to determine a charge level of the battery system when the vehicle is located at a charging station, a next animal-related action to be performed by the vehicle, a scheduled start time for starting to perform the next animal-related action, and an amount of charge level needed to leave the charging station at the scheduled start time, perform the next animal-related action and return to the charging station. If the determined charge level minus the determined needed amount of charge level is less than the minimum charge level, the battery system of the vehicle will be charged at a charge rate which is adjusted in such a manner that the battery system reaches the maximum charge level or a value as close as possible to the maximum charge level at the scheduled start time.

## Description

The invention relates to a system for performing an animal-related action with an electrically driven, autonomous vehicle. The animal-related action may comprise the removing of manure and/or urine from a floor in a barn for keeping animals, such as dairy cows, cows for meat production, pigs or goats. It is noted that "removing of manure" comprises not only the taking up of manure from a floor, for example through suction, picking up, scooping up and the like, but also the moving of manure over a floor with slotted holes, i.e. a "grid floor" or "slatted floor", in order to remove the manure to a manure reservoir under the floor. In the case of a grid floor, the manure can be removed from the floor by moving the manure through the slotted holes, so that the manure drops into the manure reservoir or manure pit under the floor. The animal-related action may also comprise the pushing of feed toward a feed fence, or to the feeding of animals, such as with silage or freshly mown grass, or to another animal-related action.

SE 1751418 A1 discloses a method and system for battery management in an agricultural barn environment. The system comprises a battery powered autonomous agricultural vehicle arranged to perform an action associated with an animal. The vehicle has a rechargeable battery. The system comprises a battery charging station and a control unit. The control unit is configured to estimate power consumption of the autonomous agricultural vehicle in order to perform a performance session for e.g. removing manure. In addition, the control unit is configured to determine a charge level of the rechargeable battery, and to compare the estimated power consumption of the performance session with the determined battery charge level. When the determined battery charge level exceeds the estimated power consumption of the performance session, the control unit orders the autonomous agricultural vehicle to perform the performance session. When the determined battery charge level is smaller than the estimated power consumption of the performance session, the control unit orders the autonomous agricultural vehicle to charge the battery. Thus, it can be determined before starting the performance session whether the charge level of the battery is sufficient, and thereby it can be avoided that the vehicle runs out of battery power and gets stalled on the barn floor during a performance session. In addition, the control unit may calculate a time period between two scheduled performance sessions. After having performed one performance session, the control unit may estimate a charging time period in order to recharge the battery. When the estimated charging time period exceeds the calculated time period between the scheduled performance sessions, the control unit may output an alert. In other words, an alert will be triggered when it is not possible to reach a required battery charge level within a given limited time.

Although it is mentioned that it is desired to increase the lifespan of the battery, the battery management according to this prior art document results in the battery of the autonomous agricultural vehicle having a short lifespan.

It is an object of the invention to provide an improved system for performing an animal-related action with a battery powered, electrically driven, autonomous vehicle, wherein the lifespan of the battery system of the autonomous vehicle is prolonged.

This object is achieved according to the invention by a system for performing an animal-related action, in particular comprising the removing of manure and/or urine from the floor in the barn, the pushing of feed toward a feed fence, or the delivering of feed to animals, such as dairy cows, cows for meat production, pigs or goats, said system comprising:
- an autonomous vehicle for performing the animal-related action, said vehicle comprising
   - a drive system for driving the vehicle, said drive system comprising at least one electric drive motor,
   - a battery system for storing electrical energy, said battery system having a maximum capacity, and said battery system being connected to provide electrical power to the drive system,
- a charging system for charging the battery system of the vehicle, and
- an electronic control system for controlling the vehicle and the charging system,
wherein the control system comprises a memory in which a minimum charge level and a maximum charge level are stored, said maximum charge level being less than the maximum capacity of the battery system, and said minimum charge level being less than the maximum charge level and greater than 0, and the control system is configured to
determine a charge level of the battery system when the vehicle is located at a charging station,
determine a next animal-related action to be performed by the vehicle,
determine a scheduled start time for starting to perform the next animal-related action,
determine a charging time period available until the scheduled start time,
determine an amount of charge level needed to leave the charging station at the scheduled start time, perform the next animal-related action and return to the charging station, and
if the determined charge level minus the determined needed amount of charge level is less than the minimum charge level,
   - calculate a charge rate equal to or less than the maximum charge rate for charging the battery system of the vehicle in such a manner that the battery system reaches the maximum charge level at the scheduled start time and charge the battery system of the vehicle at said calculated charge rate in order to reach the maximum charge level at the scheduled start time if the determined available charging time period is sufficient for the battery system to be charged to the maximum charge level at the scheduled start time when charging at the maximum charge rate, and
   - charge the battery system of the vehicle at the maximum charge rate in order to reach a value for the charge level as close or near as possible to the maximum charge level at the scheduled start time if the determined available charging time period is insufficient for the battery system to be charged to the maximum charge level at the scheduled start time when charging at the maximum charge rate.

The battery system of the vehicle comprises at least one rechargeable battery. Rechargeable batteries are consumable components which become less effective as they chemically age, i.e. batteries have a limited lifespan, eventually needing to be replaced. The lifespan of a battery is affected by different factors relating to battery degradation. For example, with lithium-ion batteries, the battery's maximum capacity diminishes slightly with each charge cycle. In addition, if the battery is fully charged or completely drained, the battery will be put under strain, which also reduces the battery's lifespan. Furthermore, the faster the battery is charged, the more strain that is put on the battery, i.e. fast charging also adversely affects the lifespan of the battery.

According to the invention, the control system is configured to control the drive system of the vehicle in such a manner that the vehicle is located at the charging station when it is not performing an animal-related action. The vehicle returns to the charging station after it has performed an animal-related action. The control system is configured to have the vehicle travel a route from the charging station, through an operating area, such as a barn, in order to perform the animal-related action, and then back to the charging station. The charging system is configured to be able to be connected to the battery system when the vehicle is at the charging station. When the vehicle is located at the charging station, the control system determines a charge level. For example, the charge level is expressed as a percentage of charge.

The control system determines the next animal-related action to be performed by the vehicle, and also the scheduled start time for starting to perform that next animal-related action. For example, the control system may be programmed to have the vehicle perform animal-related actions based on a fixed daily schedule which is stored in the memory of the control system. The fixed daily schedule may contain entries such as "vehicle travels route X at time HH:MM" for different routes X and times HH:MM during the day. Alternatively, the control system may be programmed to set the next animal-related action and to schedule the associated start time based on sensor measurements, i.e. automatically. For example, an autonomous feeding vehicle may be controlled to travel a route X for delivering feed to a feed fence based on the amount of feed which is still available at the feed fence as measured by a sensor. In this case, the next animal-related action of feeding and the associated start time do not follow a fixed daily schedule, but depend on a feeding requirement at the feed fence.

After the control system has established the next animal-related action to be performed by the vehicle, and the associated scheduled start time, the control system compares the determined charge level with an amount of charge level needed to leave the charging station at the scheduled start time, perform the next animal-related action and also return to the charging station. The determined charge level minus the determined needed amount of charge level represents an estimated charge level on return to the charging station after performing the next animal-related action. If the determined charge level minus the determined needed amount of charge level, i.e. the estimated charge level on return to the charging station, is less than the minimum charge level, the determined charge level will be insufficient for the vehicle to leave the charging station at the scheduled start time, perform the next animal-related action and get back to the charging station with at least this minimum charge level. The control system is programmed to control the charging system in this case for charging the battery system of the vehicle at a charge rate which is adjusted in such a manner that the battery system reaches the maximum charge level or a value as close as possible to the maximum charge level at the scheduled start time.

Consequently, if the determined charge level is sufficient for the vehicle to leave the charging station at the scheduled start time, perform the next animal-related action and get back to the charging station, but on return to the charging station the charge level will have dropped below the minimum charge level, i.e. if it is not strictly necessary to charge the battery system in order to return to the charging station, but then the charge level will have decreased to a value below the minimum charge level, then the charging system will charge the battery system in order to safeguard that the charge level remains above the minimum charge level. The minimum charge level is for example between 20% and 70% of the maximum capacity of the battery system, such as 60%. Thus, the control system is programmed to prevent the charge level of the battery system from dropping below the minimum charge level, which is advantageous for the lifespan of the battery system.

In addition, the control system is configured to charge the battery system to the maximum charge level or at a value closest thereto. The maximum charge level is greater than the minimum charge level. As a result thereof, the control system is programmed to prevent the battery system from being charged to a value above the maximum charge level. The maximum charge level is, for example, between 70% and 90% of the maximum capacity of the battery system, such as 80%. As the maximum charge level is less than the maximum capacity of the battery system, the battery system is not charged fully. This also prolongs the lifespan of the battery system.

Furthermore, the charge rate is adjusted in order to reach the maximum charge level or a value as close as possible to the maximum charge level at the scheduled charge time. It depends on the charging time period available until the start time scheduled for the vehicle to leave the charging station whether it is possible to reach the maximum charge level.

If the determined available charging time period is sufficient for the battery system to be charged to the maximum charge level at the scheduled start time when charging at the maximum charge rate, the control system calculates a charge rate equal to or less than the maximum charge rate for charging the battery system in such a manner that the battery system reaches the maximum charge level at the scheduled start time and the control system controls the charging system in order to charge the battery system at this calculated charge rate. Preferably, the calculated charge rate is a constant value until the scheduled start time, i.e. the calculated charge rate does not change while charging. Thus, the control system adjusts the charge rate to the time available until the scheduled start time for the next animal-related action. The charge rate is adjusted in such a manner that the battery system is charged to the maximum charge level only at the scheduled charge time and not before, i.e. the battery system is charged as slow as possible. If the next animal-related action is scheduled to start shortly, the charging system will charge the battery system quickly. However, if ample time is available until the scheduled start time, the battery system will be charged slowly. In other words, the battery system is charged as slow as possible, which is advantageous for the lifespan of the battery system.

If the determined available charging time period is insufficient for the battery system to be charged to the maximum charge level at the scheduled start time when charging at the maximum charge rate, the control system controls the charging system in order to charge the battery system at the maximum charge rate in order to reach a value for the charge level as close as possible to the maximum charge level at the scheduled start time.

Thus, the charge level is maximized when the vehicle leaves the charging station to perform the next animal-related action. The battery system is charged at the maximum charge level or at a value closest thereto when the vehicle leaves the charging station at the scheduled charge time for performing the next animal-related action. Consequently, the battery system is more often still charged at a sufficient charge level when the vehicle returns to the charging station in order to perform a subsequent animal-related action. In that case, the battery system does not need to be charged after it has returned to the charging station. There is a higher chance that after completing the next animal-related action the vehicle will return to the charging station with a remaining charge level which is still sufficient to perform the following animal-related action. And in that case, the battery system will not be charged for that following animal-related action, so that a charge cycle can be omitted. Thus, charging to the maximum charge level or a value closest thereto rather than stopping the charging process as soon as the charge level is sufficient for performing the next animal-related action and return to the charging station results in less charge cycles. In other words, because the charging of the battery system is not stopped as soon as the required charge level is reached but is continued until the maximum charge level or a value closest thereto is achieved, it frequently occurs that the battery system does not need to be charged for a subsequent animal-related action. This reduces the number of charge cycles, which has a positive effect on the lifespan of the battery system.

Therefore, the control system controls the charging system in order to maintain the charge level of the battery system between the minimum and maximum charge level as much as possible, to charge as slow as possible and to limit the number of charge cycles. As a result, the lifespan of the battery system of the autonomous vehicle according to the invention is prolonged. The lifespan may be, for example, up to 10 years.

It is possible according to the invention for the control system to be configured to, if the determined charge level minus the determined needed amount of charge level, i.e. the estimated charge level on return to the charging station, is equal to or greater than the minimum charge level, not charge the battery system of the vehicle until the scheduled start time. In this case, the charge level at the scheduled start time is sufficient for the vehicle to complete that next animal-related action and return to the charging station with at least the minimum charge level. Then, the control system is configured to control the charging system in such a manner that the battery system of the vehicle is not charged until the scheduled start time. Thus, the vehicle will then leave the charging station and start to perform the next animal-related action based on the charge level without charging. In other words, the battery system is charged at the calculated charge rate or maximum charge rate until the charge level reaches the maximum charge level or a value as close as possible to thereto, or the battery system is not charged at all. This is also advantageous for the lifespan of the battery system.

In a preferred embodiment according to the invention, the control system is configured to estimate a charge level which the battery system will have at the scheduled start time, preferably based on an instantaneous charge level measured when the vehicle is located at the charging station and an expected loss of charge level until the scheduled start time. In this case, the control system is configured to calculate the charge level that the battery system is estimated to have at the scheduled start time. The charge level may decrease slowly while the vehicle is waiting at the charging station. The control system may be configured to establish the charge level in real-time, i.e. an instantaneous charge level of the battery system. The control system may calculate an expected loss of charge level until the scheduled start time based on a discharge rate for the battery system. For example, the discharge rate is calculated by the control system based on charge levels measured over time. The control system may be configured to monitor the estimated charge level at the scheduled start time while the vehicle is at the charging station, for example by updating the estimation repeatedly, such as every minute. The control system compares the estimated charge level at the scheduled start time with the determined needed amount of charge level. Thus, with the control of the charging process as described above, the estimated charge level on return to the charging station, i.e. after performing the animal-related action, is the estimated charge level at the scheduled start time minus the determined needed amount of charge level. If this estimated charge level on return to the charging station is less than the minimum charge level, the battery will be charged as slow as possible and as high as possible under the control as described above.

In an embodiment according to the invention, a minimum charge rate is stored in the memory of the control system, wherein the control system is configured to
if the calculated charge rate is less than the minimum charge rate, charge the battery system of the vehicle at the minimum charge rate, and
if the calculated charge rate is equal to or greater than the minimum charge rate, charge the battery system of the vehicle at the calculated charge rate.

In this case, the control system is configured to compare the calculated charge rate with the minimum charge rate. The control system controls the charging system in order to charge the battery system of the vehicle at the calculated charge rate, unless the calculated charge rate is less than the minimum charge rate. Thus, it is safeguarded that the charge rate is not below the minimum charge rate. Preferably, the minimum charge rate is greater than the (self-)discharge rate of the battery system, for example the minimum charge rate has a value which is at least twice as large as the value of the (self-)discharge rate of the battery system. When charging the battery system is charged at least at the minimum charge rate so that the charge level will increase even though (self-)discharging takes place. This is also advantageous for the lifespan of the battery system.

The charge rate can be adjusted in various ways. Preferably, the control system is configured to adjust the charge rate by setting a charge current supplied to the battery system for charging thereof. The charge rate depends on the charge current, i.e. the charge rate can be adjusted by setting the charge current. In this description and the claims, the wordings "maximum charge rate" and "minimum charge rate" can be replaced with "maximum charge current" and "minimum charge current", respectively. In this case, the maximum charge rate and the minimum charge rate are stored in the memory of the control system in terms of a maximum charge current and a minimum charge current. Furthermore, in the description and claims, the wordings "calculate a charge rate" and "the calculated charge rate" can be replaced with "calculate a charge current" and "the calculated charge current", respectively. The charging process can be controlled in an accurate manner by adjusting the charge current supplied to the battery system. In order to prolong the lifespan of the battery system, it is therefore advantageous to control the charge current as the variable for adjusting the charge rate of the charging process.

In an embodiment according to the invention, wherein a minimum charge rate is stored in the memory of the control system, the control system is configured to, if the vehicle is in a non-operational mode and the determined charge level is less than the minimum charge level, charge the battery system of the vehicle at the minimum charge rate. The vehicle can have an operational mode and a non-operational mode. The non-operational mode may be a service mode which, for example, may be selected by a technician when servicing the vehicle. The non-operational mode may also be selected by a user, for example when the vehicle is a manure removing vehicle for removing manure from a barn floor and the animals, such as cows, are grazing outside of the barn. The non-operational mode may also be selected automatically by the control system, for example in case of malfunctioning of the vehicle. When the non-operational mode is selected, there will usually be sufficient time available before the vehicle is put back into operation to perform a next animal-related action. If the vehicle is in the non-operational mode and the determined charge level is or becomes less than the minimum charge level, the control system controls the charging system for charging the battery system of the vehicle at the minimum charge rate, i.e. slowly. Because the charge level of the battery system is prevented from dropping below the minimum charge level and the charging process is carried out slowly, the lifespan of the battery system is prolonged.

It is possible according to the invention for the control system to be configured to,
if the vehicle is in the non-operational mode and the determined charge level is equal to or greater than the maximum charge level, not charge the battery system of the vehicle, and
if the vehicle is in the non-operational mode and the determined charge level is less than the maximum charge level, charge the battery system of the vehicle at the minimum charge rate or not charge the battery system of the vehicle.

In this case, it is preferred according to the invention for the control system to be configured to,
if the vehicle is in the non-operational mode and the determined charge level is less than the maximum charge level, charge the battery system of the vehicle at the minimum charge rate if the charging system is already charging the battery system, i.e. if the vehicle is already being charged, and not charge the battery system of the vehicle if the charging system is not already charging the battery system, i.e. if there is no running charging process.
If the charge level is between the minimum and maximum charge level, the battery system will be charged at the minimum charge rate in case that it is already being charged. If the charge level is between the minimum and maximum charge level, the battery system will not be charged in case that it is not already being charged. If the charge level is less than the minimum charge level, the battery system will be charged regardless of whether it is already being charged or not. This is also advantageous to maximize the lifespan of the battery system.

In an embodiment according to the invention, the control system is configured to,
determine an actual charge level of the battery system when the scheduled start time has arrived, and
if the determined actual charge level at the scheduled start time minus the determined needed amount of charge level is equal to or greater than the minimum charge level, control the vehicle to leave the charging station, perform the next animal-related action and return to the charging station, and
if the determined actual charge level at the scheduled start time minus the determined needed amount of charge level is less than the minimum charge level, cancel the next animal-related action.
For example, as described above, the control system estimates, as soon as the vehicle returns to the charging station, the charge level which the battery system will have at the scheduled start time. Then, when the scheduled start time has arrived, the control system checks the charge level of the battery system. At the scheduled start time, the control system determines the actual charge level, which may deviate from the charge level predicted earlier. Based on the actual charge level at the scheduled start time, the control system checks if this actual charge level is sufficient to perform the next animal-related action and return with at least the minimum charge level at the charging station. If the actual charge level is sufficient, the control system will instruct the vehicle to leave the charging station at the scheduled start time, perform the next animal-related action and return to the charging station. However, if the actual charge level is insufficient, the control system will cancel the next animal-related action. In this case, the control system may generate a warning, for example an e-mail or text message to the user indicating that the next animal-related action is cancelled due to low battery. The control system may also continue with another animal-related action, for example based on the fixed time schedule for animal-related actions stored in the memory.

In a preferred embodiment according to the invention, the battery system comprises at least one rechargeable lithium-ion battery. Compared with other rechargeable battery technologies, lithium-ion batteries charge faster, last longer, have a higher power density and are generally lighter. The control system configured to control the charging process as described above is specifically adapted to maximize the lifespan of rechargeable lithium-ion batteries.

In an embodiment according to the invention, a plurality of different animal-related actions is stored in the memory of the control system, wherein the control system is configured to determine the next animal-related action to be performed by the vehicle by selecting one or at least one of the animal-related actions from the memory. The animal-related actions stored in the memory may define different routes to be travelled by the vehicle and/or different tasks to be carried out along the routes.

Furthermore, it is possible according to the invention for the memory of the control system to hold a fixed time schedule comprising predetermined times for performing each of the animal-related actions, wherein the control system is configured to determine the scheduled start time for starting to perform the next animal-related action based on the stored time schedule. For example, as already described above, the control system may be programmed to have the vehicle perform animal-related actions based on a fixed daily schedule which is stored in the memory of the control system. The fixed daily schedule may contain entries such as "vehicle travels route X at time H H: M M" for different routes X and times HH:MM during the day. The control system then determines the next animal-related action to be performed and the associated scheduled start time by reading the fixed time schedule from the memory.

It is noted again that the control system may also be programmed to set the next animal-related action and to schedule the associated start time based on sensor measurements, i.e. automatically. For example, the vehicle for performing the animal-related action may be a feeding robot. When feeding animals, such as cows, in a barn having a plurality of feed fences, different routes and rations may be stored in the memory. The system may include a sensor configured to measure the amount of feed which is still available at the feed fences. The system may be configured to deliver feed to each feed fence as soon as the measured amount of feed which is still available at that feed fence drops below a threshold value. In this case, the control system may be programmed to determine the next animal-related action, i.e. a feed task, and the associated start time based on the feed requirement at the feed fences. Thus, the next animal-related action of feeding and the associated start time do not follow a fixed daily schedule, but depend on a feeding requirement at the feed fence.

In an embodiment according to the invention, the control system is configured to measure, each time the vehicle leaves the charging station, performs an animal-related action and returns to the charging station, an energy consumption value associated therewith and to store that measured energy consumption value in the memory, and wherein the control system is configured to determine the needed amount of charge level based on the stored energy consumption values. The control system is configured to monitor the energy consumption when performing subsequent animal-related actions. The energy consumption value is repeatedly measured, i.e. for each time the vehicle leaves the charging station, performs an animal-related action and returns to the charging station. For each animal-related action, an average energy consumption may be calculated based on the stored energy consumption values. The amount of energy consumed on average can be used to calculate the needed amount of charge level for the next animal-related action in an accurate manner.

The vehicle may be configured in various ways. In an embodiment according to the invention, the vehicle is configured for removing manure and/or urine from a floor in a barn for animals, such as dairy cows, cows for meat production, pigs or goats. Alternatively, the vehicle may be configured for pushing feed which is situated along a feed fence substantially transversely to a direction of travel of the vehicle and towards the feed fence when the vehicle moves in the direction of travel along the feed fence. Animals which are situated behind the feed fence pass their head through an opening in the feed fence to eat. While eating, the animals push the feed away from the feed fence until it is out of reach of the animals. The vehicle may be configured to push and/or move the feed back in the direction towards the feed fence when the vehicle travels along the feed fence. In addition, it is possible for the vehicle to be provided with a container for accommodating a batch of feed, wherein the vehicle is configured for delivering feed accommodated in the container to at least one feeding place for animals.

The invention also relates to, in combination, a barn for keeping animals, such as dairy cows or cows for meat production, pigs or goats, as well as a system as described above. In particular, the vehicle and the charging station are then located for example in the barn, i.e. in the space for keeping animals. The charging station may, however, also be placed outside the barn.

The invention further relates to a method for performing an animal-related action, in particular removing manure and/or urine from a floor of a barn for keeping animals, pushing of feed toward a feed fence, or delivering feed to animals, wherein use is made of a system as described above, and wherein the method comprises:
determining a charge level of the battery system when the vehicle is located at a charging station,
determining a next animal-related action to be performed by the vehicle, determining a scheduled start time for starting to perform the next animal-related action,
determining a charging time period available until the scheduled start time, determining an amount of charge level needed to leave the charging station at the scheduled start time, perform the next animal-related action and return to the charging station, and
if the determined charge level minus the determined needed amount of charge level is less than the minimum charge level,
   - calculating a charge rate equal to or less than the maximum charge rate for charging the battery system of the vehicle in such a manner that the battery system reaches the maximum charge level at the scheduled start time and charging the battery system of the vehicle at said calculated charge rate if the determined available charging time period is sufficient for the battery system to be charged to the maximum charge level at the scheduled start time when charging at the maximum charge rate, and
   - charging the battery system of the vehicle at the maximum charge rate in order to reach a value for the charge level as close as possible to the maximum charge level at the scheduled start time if the determined available charging time period is insufficient for the battery system to be charged to the maximum charge level at the scheduled start time when charging at the maximum charge rate.

The method according to the invention has the same technical effects and advantages as described above in relation to the system according to the invention.

The invention will now be explained in more detail with reference to the appended figures.
Figure 1 shows a schematic top view of a barn with a system for performing an animal-related action in accordance with the invention.
Figure 2 shows a perspective view of a manure removing vehicle in a charging station of the system shown in Figure 1.
Figure 3 shows a top view of the manure removing vehicle shown in Figure 2 in the charging station.
Figure 4 shows a flow diagram illustrating the steps in charging the battery system of the manure removing vehicle shown in Figures 2 and 3.
Figure 5 shows a top view of a feed pushing vehicle along a feed fence of the system shown in Figure 1.
Figure 6 shows a side view of a feeding vehicle in a charging station of the system shown in Figure 1.

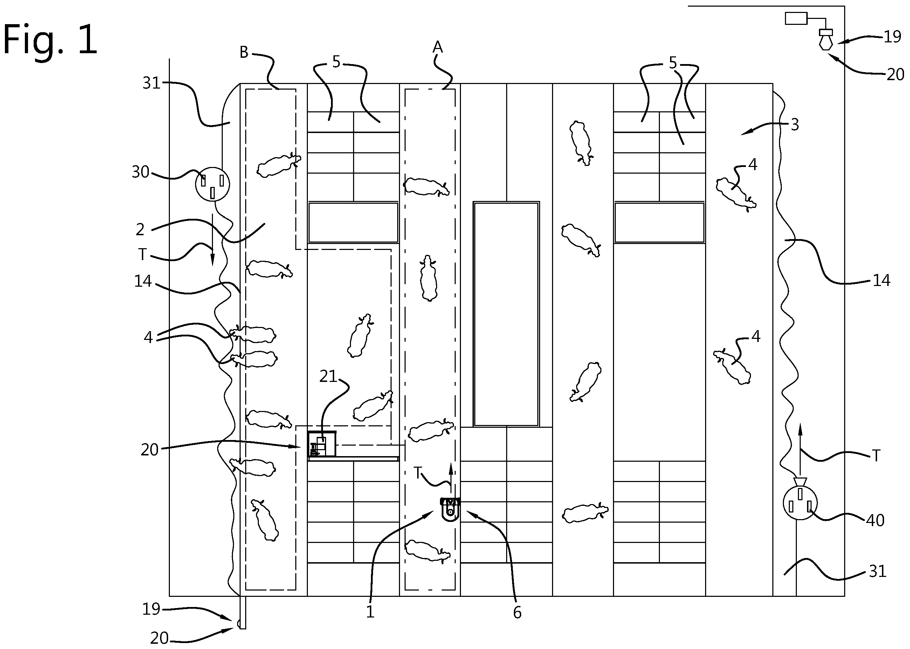

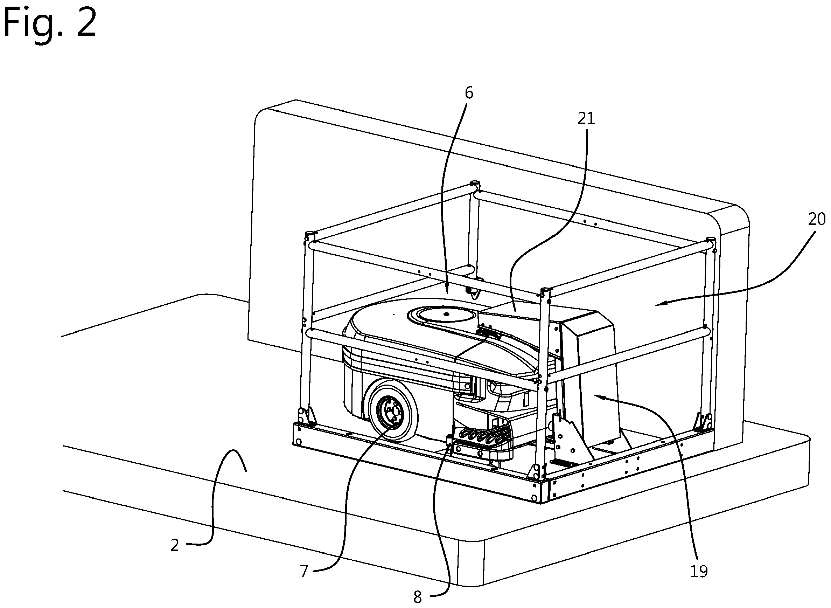

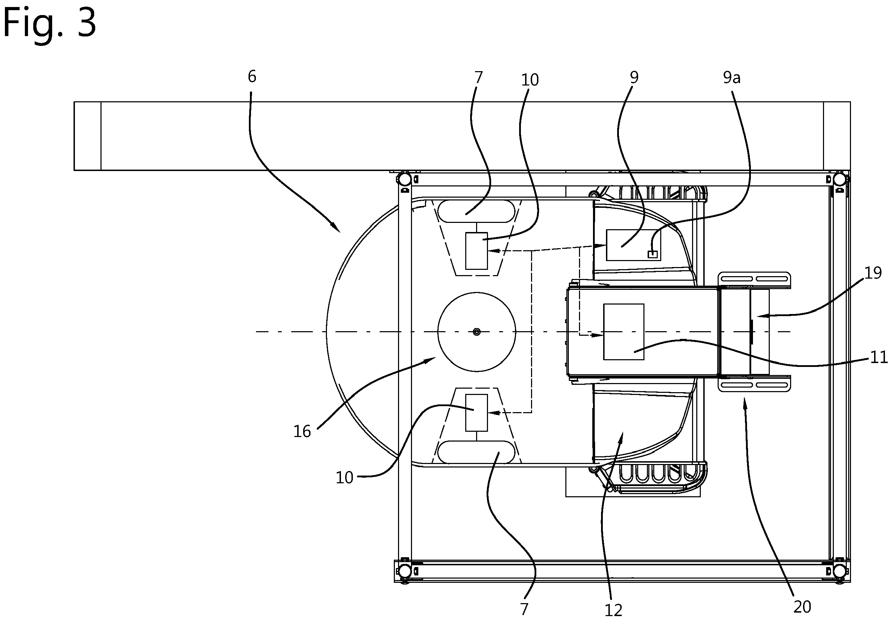

Figure 1 shows a system 1 for performing an animal-related action. In this exemplary embodiment, the animal-related action comprises the removing of manure and/or urine from a solid floor 2 in a barn 3 that is configured as a typical loose housing barn for cows with cubicles 5. On the floor 2 there is manure and urine from the animals 4, and for example also straw, sand and/or sawdust, with which the cubicles 5 are lined. The system 1 comprises an autonomous manure removing vehicle 6 for removing manure. The manure removing vehicle 6 is located on the floor 2 among the animals 4. The manure removing vehicle 6 is supported on the floor 2 by means of two wheels 7 and a manure slider 8 (see Figures 2 and 3). The manure removing vehicle 6 may, however, also be supported in some other way, for example with a front wheel or a supporting element, such as a sliding block.

The manure removing vehicle 6 is unmanned and self-propelled. The manure removing vehicle 6 can find its way autonomously by means of an electronic control system 9 (see Figure 3) and sensors (not shown), such as an ultrasonic sensor and a gyroscope. On the basis of the signals detected by the sensors, the control system 9 controls a drive system with electric drive motors 10 for the wheels 7 of the manure removing vehicle 6. Because the wheels 7 are controllable independently of each other, the manure removing vehicle 6 can be steered and can travel a desired route through the barn 3. In particular, the vehicle 6 is configured to travel a plurality of different routes. Two routes A and B are depicted schematically in Figure 1. Of course, the manure removing vehicle 6 may travel only one route or more than two different routes.

The manure slider 8 is configured for moving and/or scraping manure over the floor 2. During travel of the manure removing vehicle 6 over the floor 2, the manure slider 8 is in contact with the floor 2 in order to move and/or scrape manure that is present thereon. The manure slider 8 has for example a flexible bottom edge that scrapes over the floor 2. In this exemplary embodiment the manure slider 8 forms part of a manure feed device for feeding or introducing manure from the floor 2 and moving the fed-in manure to a manure storage container 16 (see Figure 3), which defines an interior, in which manure can be collected temporarily.

The manure storage container 16 comprises a bottom, which slants toward a manure feed and discharge opening, which is arranged at the lowest level of the bottom (not shown). Although in this exemplary embodiment the manure storage container 16 has a single manure feed and discharge opening, i.e. manure taken up from the floor 2 is fed via this opening 18 to the manure storage container 16 and during emptying of the manure storage container 16 the collected manure leaves the manure storage container 16 via the same opening 18, it is also possible for the manure removing vehicle 6 to have two separate openings: a first opening for supply of manure and a second opening for discharge of manure.

During travel, manure collects on the floor 2 in front of the manure slider 8, which extends partially around the manure feed opening and outlet. With the solid barn floor 2, a quantity of manure is accumulated or pushed up in front of the manure slider 8, i.e. a "manure bath" forms in front of the manure slider 8. In this exemplary embodiment the manure feed device comprises a vacuum pump in order to generate a partial vacuum in the interior of the manure storage container 16, so that manure in the manure bath is sucked up from the floor 2 and flows via the manure feed and discharge opening to the interior of the manure storage container 16. The manure is stored therein until the manure storage container 16 gets substantially full.

A manure feed device for sucking up manure is described in detail in WO 2013/010785 A1, the contents of which are incorporated by reference in the present description, and will not be explained further. It should be noted that the manure feed device may also have some other configuration. Instead of sucking up manure as described above, the manure feed device may for example comprise a mechanical pickup mechanism for picking up or scooping up manure from the floor 2. Then the manure is for example moved upward by means of a rotor, and then ends up inside the manure storage container via a manure feed opening.

If the manure storage container 16 is full, the manure feed device stops the in-feed of manure and the manure removing vehicle 6 travels to a dump in order to empty the manure storage container 8. At the dump, a dump opening 21 is installed in the floor 2, which opens into a manure reservoir or manure pit (not shown), which extends underneath the floor 2. If the manure removing vehicle 6 with the manure feed and discharge opening is positioned above the dump opening 21 (see Figure 2), the control system 9 switches off the vacuum pump, so that the partial vacuum in the interior of the manure storage container 16 disappears and the manure flows under the effect of gravity from the manure storage container 16, through the dump opening 21, and into the manure reservoir.

The discharge of the manure may, however, also have some other configuration. In the case of a manure removing vehicle that picks up manure and brings it via a rotor upward to the manure storage container, for example a separate manure discharge opening is provided, which is closable by a controllable discharge valve. At the dump, the discharge valve for example swivels away to open the manure discharge opening, so that the manure drops from the manure storage container into the manure reservoir.

Although the manure removing vehicle 6 described above is configured for receiving the manure and moving the received manure to a dump, the autonomous manure removing vehicle may, however, also be configured for moving and/or scraping manure through slot-shaped openings of a "grid floor" or "slatted floor" of the barn (not shown). In other words, in this case, during travel of the manure removing vehicle the manure slider scrapes over a grid floor of the barn to push the manure through the slots, which then drops into the manure reservoir under the floor under the effect of gravity.

The drive system and the control system 9 of the manure removing vehicle 6 are supplied by a battery system 11 for storing electrical energy on board the manure removing vehicle 6. The battery system 11 comprises one or more rechargeable batteries, in particular 24V lithium-ion batteries. The battery system 11 has a maximum capacity, i.e. the total amount of electrical energy it may contain when fully charged. The battery system 11 and electronic components of the control system 9, which are not resistant to manure or urine, are enclosed in a housing 12 of the manure removing vehicle 6. The housing 12 forms an electrical enclosure for housing electrical and/or electronic components of the manure removing vehicle 6.

The system 1 further comprises a charging system 19 for charging of the battery system 11 of the manure removing vehicle 6. In order to charge the battery system 11, the manure removing vehicle 6 travels to a charging station 20 (see Figure 1). The charging station 20 defines a charging position for the manure removing vehicle 6 during charging of the battery system 11. In this exemplary embodiment the charging station 20 comprises the dump opening 21, i.e. the charging station and the dump are integrated in this case. During discharge of the manure, the battery system 11 of the manure removing vehicle 6 can be charged. Obviously it is also possible that the charging station 20 does not form a dump. Also, the charging station and/or the dump, each separately or combined, may be placed outside the barn 3.

In this exemplary embodiment, the charging system 19 is configured to charge the manure removing vehicle 6 wirelessly. The charging system 19 at the charging station 20 comprises a transmitting plate with a primary coil (not shown). The transmitting plate is suspended substantially horizontally above the floor 2 by means of a carrying arm 21 (see Figure 2). The manure removing vehicle 6 comprises a receiving plate with a secondary coil (not shown). The receiving plate is fastened rigidly to an upper side of the manure removing vehicle 6. The transmitting plate and the receiving plate are each formed by a round disk ("charging pad"), in this exemplary embodiment with a diameter of about 16 cm and a thickness of about 2 cm. The primary and secondary coils may each comprise one or more induction coils, for example a stack of induction coils.

In order to charge the battery system 11 wirelessly, the primary coil of the transmitting plate and the secondary coil of the receiving plate are mutually aligned in a charging state, in which electrical energy is transferable wirelessly from the primary coil to the secondary coil. The downward facing flat surface of the transmitting plate and the upward facing flat surface of the receiving plate of the manure removing vehicle 6 can be brought over and/or on each other in the charging state. For reliable and efficient wireless energy transfer it is desirable to position the primary coil of the transmitting plate close to the secondary coil of the receiving plate, in particular at a distance apart of for example max. 1 or 2 cm.

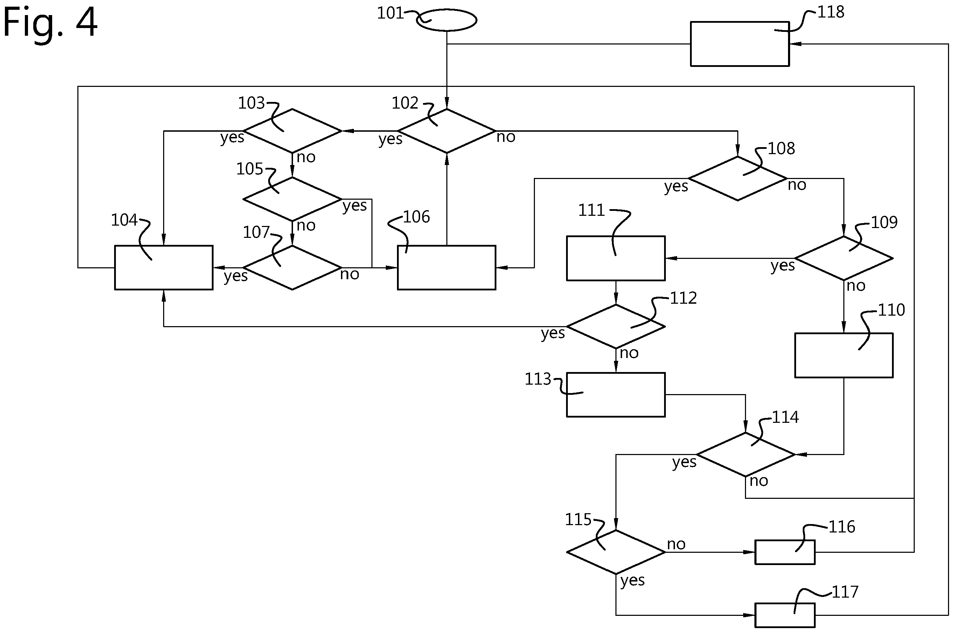

The control system 9 is programmed to control the charging process as illustrated in the flow diagram shown in Figure 4. The control system 9 comprises a memory 9a (schematically depicted in Figure 3) in which a minimum charge level and a maximum charge level are stored. In this exemplary embodiment, the charge level is expressed as a percentage of charge. The maximum charge level is less than the maximum capacity of the battery system 11, for example 80%. The minimum charge level is less than the maximum charge level and greater than 0, such as 60%. It is advantageous for the lifespan of the lithium-ion batteries of the battery system 11 that the charge level is kept between the minimum and maximum charge level.

In addition, a maximum and minimum charge current to be supplied to the battery system 11 for charging thereof are stored in the memory 9a of the control system 9. The maximum charge current and the minimum charge current determine the maximum charge rate and the minimum charge rate, respectively. In order to prolong the lifespan of the battery system, it is advantageous to maintain the charge current below the maximum charge current. The minimum charge current is chosen in such a way that the minimum charge rate is greater than the (self-)discharge rate of the battery system 11. In other words, when charging with the minimum charge current, the charge level of the battery system 11 will increase slowly. The charge current is kept above the minimum charge current when charging the lithium-ion batteries.

Also, the routes for the vehicle 6 are stored in the memory 9a, such as the routes A and B depicted schematically in Figure 1. For example, each route may be stored in the memory 9a as a plurality of navigation instructions, such as "travel 10 m straight ahead based on the gyroscope", "travel at a fixed distance along the feed fence based on the ultrasonic sensor", and so on. Each route starts and ends in the charging station 20. Consequently, the vehicle 6 is in the charging station 20 when it is not removing manure, i.e. the vehicle 6 returns to the charging station 20 after removing manure and waits in the charging station 20 until the next route starts. In this exemplary embodiment, the memory 9a furthermore holds a fixed daily time schedule. The fixed daily time schedule may contain entries such as "vehicle travels route X at time H H: M M" for different routes X (A, B, etc.) and times HH:MM during the day.

For each route, an associated average energy consumption value is also stored in the memory 9a. The control system 9 is configured to monitor energy consumption while the vehicle 6 travels along subsequent routes for removing manure. Each time the vehicle 6 travels along a route starting from the charging station 20, through an area of the floor 2 for removing manure, and back to the charging station 20, the control system 9 determines an energy consumption value associated therewith. The energy consumption values are stored in the memory 9a. The control system 9 is programmed to calculate, for each route, the average energy consumption value based on these stored energy consumption values gathered over time. The average energy consumption values for the different routes are stored in the memory 9a.

When the control system 9 has been started (step 101 in Figure 4), i.e. the control system 9 is up and running, and the vehicle 6 is located in the charging station 20, the control system 9 first checks if the vehicle 6 is in an operational mode or a non-operational mode (step 102). The non-operational mode may be a service mode which, for example, may be selected by a technician when servicing the vehicle 6. A user may also switch the charging process to the non-operational mode, for example when the animals are grazing outside of the barn 3 and it is not needed to clean the floor 2 inside the barn 3. The non-operational mode may also be selected automatically by the control system 9, for example in case of the control system 9 detecting a malfunction of the vehicle 6.

If the control system 9 determines that the answer to the question "is the vehicle in the non-operational mode?" at step 102 is "yes", then the control system 9 will consider step 103. If the vehicle 6 is in the non-operational mode, there will usually be ample time available before the vehicle 6 is put back into operation for removing manure again. The control system 9 is programmed to determine a charge level of the battery system 11 when the vehicle 6 in the non-operational mode is located at the charging station 20. The control system 9 compares the determined charge level with the minimum charge level stored in the memory 9a and checks if the determined charge level is less than the minimum charge level (step 103). If the determined charge level is less than the minimum charge level, the control system 9 is programmed to charge the battery system 11 with the minimum charge current (step 104), i.e. slowly.

If the determined charge level is not less than the minimum charge level, the control system 9 is programmed to compare the determined charge level with the maximum charge level and to check if the determined charge level is equal to or greater than the maximum charge level (step 105). If the determined charge level is equal to or greater than the maximum charge level, then the battery system 11 is not charged (step 106). However, if the determined charge level is less than the maximum charge level, the control system 9 is programmed to check if the battery system is already being charged by the charging system (step 107). If there is a running charging process, the battery system 11 is charged with the minimum charge current (step 104), i.e. slowly. If the battery system 11 is not already being charged, the control system will not start charging the battery system 11 (step 106).

If the vehicle 6 is located at the charging station 20 and in operation, i.e. the control system 9 determines at step 102 that the vehicle is not in the non-operational mode, i.e it is in the operational mode, then the control system 9 determines (step 108) the next route for removing manure to be travelled by the vehicle 6 and the associated scheduled start time based on the fixed time schedule stored in the memory 9a. The control system 9 also estimates a charge level which the battery system 11 will have at the scheduled start time. The control system 9 may calculate the charge level that the battery system 11 is estimated to have at the scheduled start time based on an instantaneous charge level measured when the vehicle 6 is located in the charging station 20 and an expected loss of charge level due to (self-)discharge until the scheduled start time.

The control system 9 is programmed to determine a needed amount of charge level for the next route based on the average energy consumption value for that route stored in the memory 9a. In other words, for each route, the average energy consumption value as stored in the memory 9a may be converted into a needed amount of charge level, i.e. expressed as a percentage of charge. The needed amount of charge level may also be stored in the memory 9a. The control system 9 compares the determined charge level, i.e. the charge level which the battery system 11 is estimated to have at the scheduled start time, with this amount of charge level needed to leave the charging station 20 at the scheduled start time, travel along that next route for removing manure, and return to the charging station 20. The control system 9 then checks if this estimated charge level minus the needed amount of charge level is equal to or greater than the minimum charge level (step 108).

If the determined charge level minus the needed amount of charge level is equal to or greater than the minimum charge level, the control system 9 is programmed to not charge the battery system 11 until the scheduled start time (step 106). In this case, the charge level at the scheduled start time will be sufficient for the vehicle 6 to complete the next route for removing manure and return to the charging station 20 with at least the minimum charge level. Thus, the battery system 11 will not be charged until the scheduled start time, and the vehicle will leave the charging station 20 at the scheduled start time to travel the next route based on the charge level without charging.

However, if the determined charge level minus the determined needed amount of charge level is less than the minimum charge level, the determined charge level will be insufficient for the vehicle 6 to leave the charging station 20 at the scheduled start time, travel along the next route for removing manure and get back to the charging station 20 with at least this minimum charge level. The control system 9 is programmed to control the charging system 19 in this case for charging the battery system 11 with a charge current which is adjusted in such a manner that the battery system 11 reaches the maximum charge level or a value as close as possible to the maximum charge level at the scheduled start time.

In other words, if the determined charge level is in principle sufficient for the vehicle 6 to leave the charging station 20 at the scheduled start time, travel the next route for removing manure and get back to the charging station 20, then the battery system 11 will nevertheless be charged when on return to the charging station 20 the charge level will have dropped below the minimum charge level. Even if it is not strictly necessary to charge the battery system 11 in order to return to the charging station 20, the charging system 19 will charge the battery system 11 if the charge level will decrease to a value below the minimum charge level during the next route to be travelled. It is thus safeguarded that the charge level remains above the minimum charge level.

Furthermore, because the charging of the battery system 11 is continued until the maximum charge level or a value as near as possible thereto is achieved, it frequently occurs that the battery system 11 does not need to be charged for a subsequent route for removing manure. After completing the next scheduled route for removing manure and returning to the charging station 20, the charge level is often sufficient to thereafter travel the following route without charging in the meantime (steps 108 and 106). The number of charge cycles is thereby reduced.

After the control system has established at step 108 that the charge level which the battery system 11 is estimated to have at the scheduled start time minus the needed amount of charge level is less than the minimum charge level, the control system 9 determines a charging time period available until the scheduled start time (step 109). For example, when the vehicle 6 returns to the charging station 20, the control system 9 immediately checks the available charging time period until the scheduled start time. Because of the maximum charge current, it depends on the available time whether it is possible to reach the maximum charge level or only a value below the maximum charge level at the scheduled start time. At step 109, the control system checks if the available charging time period is sufficient to charge the battery system 11 to the maximum charge level.

If the available charging time period is insufficient for the battery system 11 to be charged to the maximum charge level when charging with the maximum charge current stored in the memory 9a, the battery system 11 will be charged with that maximum charge current in order to reach a value for the charge level as close as possible to the maximum charge level at the scheduled start time (step 110). However, if the available charging time period is sufficient for the battery system 11 to be charged to the maximum charge level when charging with the maximum charge current, the control system calculates a charge current equal to or less than the maximum charge current for charging the battery system 11 in such a manner that the battery system 11 reaches the maximum charge level at the scheduled start time (step 111). Thus, the control system 9 adjusts the charge current to the time available until the scheduled start time for the next animal-related action. If the next route is scheduled to start shortly, the charging system 19 will charge the battery system 11 quickly. However, if it takes a long time until the scheduled start time, the battery system 11 will be charged slowly. In other words, the battery system 11 is charged as slow as possible.

The control system 9 also compares the calculated charge current with the minimum charge current stored in the memory 9a and checks if the calculated charge current is less than the minimum charge current (step 112). If the calculated charge current is less than the minimum charge current, the battery system 11 will be charged with the minimum charge current (step 104). If the calculated charge current is equal to or greater than the minimum charge current, the battery system 11 will be charged with the calculated charge current (step 113). Thus, the control system 9 controls the charging system 19 in order to charge the battery system 11 with the calculated charge current, unless the calculated charge current is less than the minimum charge current. Thereby, it is safeguarded that the charge current does not fall below the minimum charge current.

When charging the battery system 11 with either the maximum charge current (step 110) or the calculated charge current (step 113), the control system 9 monitors when it is the scheduled start time, i.e. the control system 9 checks if the scheduled start time has arrived (step 114). If it is time to start the next route, the control system 9 checks the charge level of the battery system 11. At the scheduled start time, the control system 9 determines the actual charge level, which may deviate from the charge level estimated earlier. Based on the actual charge level at the scheduled start time, the control system 9 checks if this actual charge level is sufficient to perform the next animal-related action and return with at least the minimum charge level at the charging station 20 (step 115).

If the actual charge level is sufficient, the control system 9 controls the drive system of the vehicle 6 so that it travels out of the charging station 20 at the scheduled start time and starts the next route (step 117). In this exemplary embodiment the vehicle 6 first moves back, and then turns sideways away from the charging station 20. When the vehicle 6 has left the charging station 20, it will travel along the next route for removing manure and after that return to the charging station 20 again (step 118). However, if the actual charge level is insufficient, the control system 9 will cancel the next route (step 116). In this case, the control system may generate a warning, for example an e-mail or text message to the user indicating that the next animal-related action is cancelled due to low battery. The control system may also continue with another animal-related action, for example based on the fixed time schedule for animal-related actions stored in the memory.

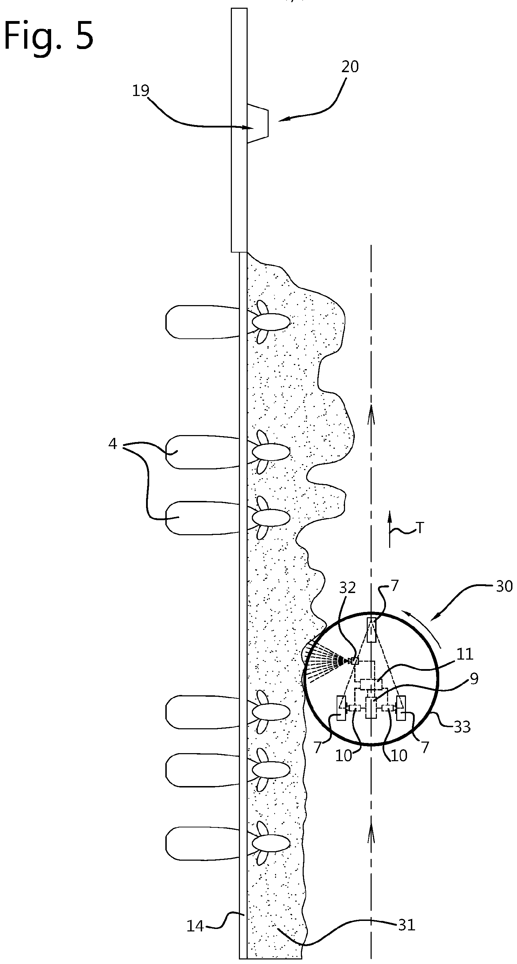

The charging process according to the invention is not limited to a manure removing vehicle and may also be used with another vehicle for performing an animal-related action. For example, as shown in Figures 1 and 5, the vehicle may be a feed pushing vehicle 30 configured for pushing feed which is situated along a feed fence 14 substantially transversely to a direction of travel T of the vehicle 30 and towards the feed fence 14 when the vehicle 30 moves in the direction of travel T along the feed fence 14. Animals 4 which are situated behind the feed fence 14 pass their head through an opening in the feed fence 14 to eat. While eating, the animals 4 push the feed away from the feed fence 14 until it is out of reach of the animals 4. The vehicle 30 comprises a rotating skirt 33 configured to push and/or move the feed back in the direction towards the feed fence 14 when the vehicle 30 travels in the direction of travel T along the feed fence 14. The vehicle 30 is controlled to travel at a fixed distance to the feed fence 14 based on measurements of an ultrasonic sensor 32.

In this exemplary embodiment the charging system 19 for the feed pushing vehicle 30 is not configured to charge wirelessly. The battery system of the feed pushing vehicle 30 is connected to electrically conductive charging strips which extend on the outside of the vehicle 30 (not shown). In order to charge the battery system, the vehicle 30 travels to a charging station 20 with charging electrodes. In the charging station 20, the vehicle 30 maneuvers in such a way that the charging strips on the outside of the vehicle 30 make contact with the charging electrodes of the charging station 20 and charging current can be supplied to the battery system. The control of the charging process may be the same as described above with reference to Figure 4.

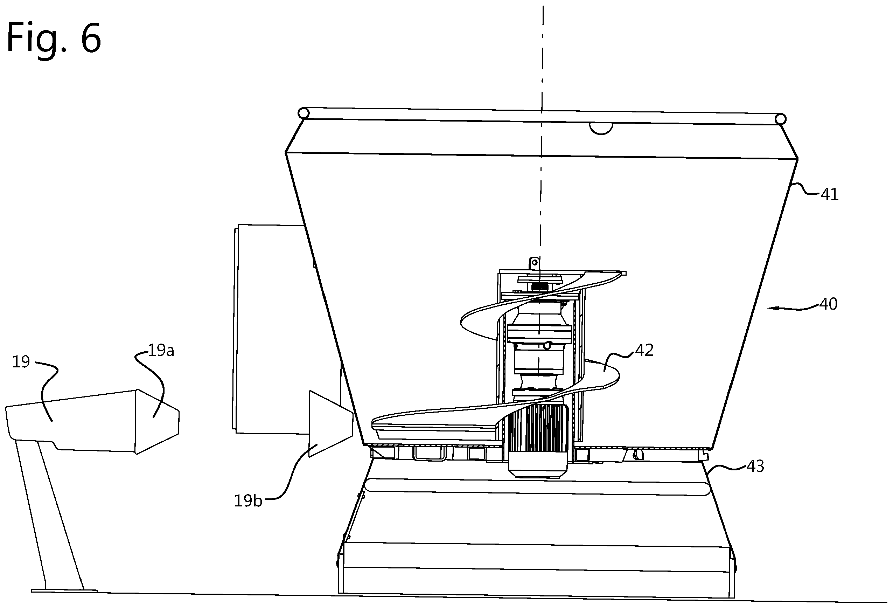

In addition, the vehicle may be a feeding vehicle 40 as shown in Figures 1 and 6. The vehicle 40 may be provided with a container 41 for accommodating a batch of feed. In this exemplary embodiment the container 41 comprising a mixing auger 42 for mixing and/or cutting feed in the container 41. The vehicle 41 is configured for delivering feed accommodated in the container 40 to a feed fence 14, as illustrated in Figure 1. The vehicle 41 also comprises a rotating skirt 43 for pushing feed in the same way as described above in respect of the feed pushing vehicle. The charging system 19 for the feeding vehicle 40 shown in Figure 4 comprises a first charging part 19a in the charging station 20 and a second charging part 19b attached to the vehicle 40. When the first and second charging parts 19a, 19b are in contact with each other, the battery system of the vehicle 40 can be charged. The control of the charging process may be the same as described above with reference to Figure 4.

The invention is not limited to the exemplary embodiment shown in the figures. A person skilled in the art can make various adjustments that are within the scope of the invention. For example, the manure feed device of the manure removing vehicle may be configured differently. Instead of sucking up manure as described above, the manure feed device may comprise a mechanical scooping mechanism for scooping up manure from the floor.

## Claims

1. A system for performing an animal-related action, said system (1) comprising:
• an autonomous vehicle (6) for performing the animal-related action, said vehicle (6) comprising
- a drive system for driving the vehicle (6), said drive system comprising at least one electric drive motor (10),
- a battery system (11) for storing electrical energy, said battery system (11) having a maximum capacity, and said battery system (11) being connected to provide electrical power to the drive system,
• a charging system (19) for charging the battery system of the vehicle (6), and
• a control system (9) for controlling the vehicle (6) and the charging system (19),
**characterized in that**
the control system (9) comprises a memory (9a) in which a maximum charge rate, a minimum charge level and a maximum charge level are stored, said maximum charge level being less than the maximum capacity of the battery system (11), and said minimum charge level being less than the maximum charge level and greater than 0, and the control system (9) is configured to
determine a charge level of the battery system (11) when the vehicle (6) is located at a charging station (20),
determine a next animal-related action to be performed by the vehicle (6),
determine a scheduled start time for starting to perform the next animal-related action,
determine a charging time period available until the scheduled start time,
determine an amount of charge level needed to leave the charging station (20) at the scheduled start time, perform the next animal-related action and return to the charging station (20), and
if the determined charge level minus the determined needed amount of charge level is less than the minimum charge level,
- calculate a charge rate equal to or less than the maximum charge rate for charging the battery system (11) of the vehicle (6) in such a manner that the battery system (11) reaches the maximum charge level at the scheduled start time and charge the battery system (11) of the vehicle (6) at said calculated charge rate if the determined available charging time period is sufficient for the battery system (11) to be charged to the maximum charge level at the scheduled start time when charging at the maximum charge rate, and
- charge the battery system (11) of the vehicle (6) at the maximum charge rate in order to reach a value for the charge level as close as possible to the maximum charge level at the scheduled start time if the determined available charging time period is insufficient for the battery system (11) to be charged to the maximum charge level at the scheduled start time when charging at the maximum charge rate.

2. A system as claimed in claim 1, wherein the control system (9) is configured to, if the determined charge level minus the determined needed amount of charge level is equal to or greater than the minimum charge level, not charge the battery system (11) of the vehicle (6) until the scheduled start time.

3. A system as claimed in claim 1 or 2, wherein the control system (9) is configured to estimate a charge level which the battery system (11) will have at the scheduled start time, preferably based on an instantaneous charge level measured when the vehicle (6) is located at the charging station (20) and an expected loss of charge level until the scheduled start time, and wherein the determined charge level is the estimated charge level at the scheduled start time.

4. A system as claimed in one or more of the preceding claims, wherein a minimum charge rate is stored in the memory of the control system (9), and wherein the control system is configured to
if the calculated charge rate is less than the minimum charge rate, charge the battery system of the vehicle at the minimum charge rate, and
if the calculated charge rate is equal to or greater than the minimum charge rate, charge the battery system of the vehicle at the calculated charge rate.

5. A system as claimed in one or more of the preceding claims, wherein the control system is configured to adjust the charge rate by setting a charge current supplied to the battery system for charging thereof.

6. A system as claimed in one or more of the preceding claims, wherein a minimum charge rate is stored in the memory of the control system (9), and wherein the control system (9) is configured to, if the vehicle (6) is in a non-operational mode and the determined charge level is less than the minimum charge level, charge the battery system (11) of the vehicle (6) at the minimum charge rate.

7. A system as claimed in claim 6, wherein the control system (9) is configured to,
if the vehicle (6) is in the non-operational mode and the determined charge level is equal to or greater than the maximum charge level, not charge the battery system (11) of the vehicle (6), and
if the vehicle (6) is in the non-operational mode and the determined charge level is less than the maximum charge level, charge the battery system (11) of the vehicle (6) at the minimum charge rate or not charge the battery system (11) of the vehicle (6).

8. A system as claimed in claim 7, wherein the control system (9) is configured to,
if the vehicle (6) is in the non-operational mode and the determined charge level is less than the maximum charge level, charge the battery system (11) of the vehicle (6) at the minimum charge rate if the charging system is already charging the battery system (11) and not charge the battery system (11) of the vehicle (6) if the charging system is not already charging the battery system (11).

9. A system as claimed in one or more of the preceding claims, wherein the control system (9) is configured to,
determine an actual charge level of the battery system (11) when the scheduled start time has arrived, and
if the determined actual charge level at the scheduled start time minus the determined needed amount of charge level is equal to or greater than the minimum charge level, control the vehicle (6) to leave the charging station (20), perform the next animal-related action and return to the charging station (20), and
if the determined actual charge level at the scheduled start time minus the determined needed amount of charge level is less than the minimum charge level, cancel the next animal-related action.

10. A system as claimed in one or more of the preceding claims, wherein the battery system comprises at least one rechargeable lithium-ion battery.

11. A system as claimed in one or more of the preceding claims, wherein a plurality of different animal-related actions is stored in the memory of the control system, and wherein the control system is configured to determine the next animal-related action to be performed by the vehicle (6) by selecting at least one of the animal-related actions from the memory.

12. A system as claimed in claim 11, wherein a fixed time schedule comprising predetermined times for performing each of the animal-related actions is stored in the memory of the control system, and wherein the control system is configured to determine the scheduled start time for starting to perform the next animal-related action based on the stored time schedule.

13. A system as claimed in one or more of the preceding claims, wherein the control system is configured to determine, each time the vehicle leaves the charging station (20), performs an animal-related action and returns to the charging station (20), an energy consumption value therefor and to store said determined energy consumption value in the memory, and wherein the control system is configured to determine the needed amount of charge level based on the stored energy consumption values.

14. The system as claimed in one or more of the preceding claims, wherein the vehicle (6) is configured for removing manure and/or urine from a floor (2) in a barn (3) for animals (4), such as cows.

15. The system as claimed in one or more of the preceding claims, wherein the vehicle (6) is configured for pushing feed which is situated along a feed fence substantially transversely to a direction of travel (A) of the vehicle (6) and towards the feed fence (2) when the vehicle (6) moves in the direction of travel (A) along the feed fence (2).

16. The system as claimed in one or more of the preceding claims, wherein the vehicle (6) comprises a container for accommodating a batch of feed (1), and wherein the vehicle (6) is configured for delivering feed accommodated in the container to at least one feeding place for animals, such as cows.

17. In combination, a barn (3) for keeping animals (4), such as cows, as well as a system (1) as claimed in one or more of the preceding claims.

18. A method for performing an animal-related action, wherein use is made of a system (1) as claimed in one or more of the preceding claims 1-15, and wherein the method comprises:
determining a charge level of the battery system (11) when the vehicle (6) is located at a charging station (20),
determining a next animal-related action to be performed by the vehicle (6),
determining a scheduled start time for starting to perform the next animal-related action,
determining a charging time period available until the scheduled start time,
determining an amount of charge level needed to leave the charging station (20) at the scheduled start time, perform the next animal-related action and return to the charging station (20), and
if the determined charge level minus the determined needed amount of charge level is less than the minimum charge level,
- calculating a charge rate equal to or less than the maximum charge rate for charging the battery system (11) of the vehicle (6) in such a manner that the battery system (11) reaches the maximum charge level at the scheduled start time and charging the battery system (11) of the vehicle (6) at said calculated charge rate if the determined available charging time period is sufficient for the battery system (11) to be charged to the maximum charge level at the scheduled start time when charging at the maximum charge rate, and
- charging the battery system (11) of the vehicle (6) at the maximum charge rate in order to reach a value for the charge level as close as possible to the maximum charge level at the scheduled start time if the determined available charging time period is insufficient for the battery system (11) to be charged to the maximum charge level at the scheduled start time when charging at the maximum charge rate.
